(19) Europäisches Patentamt
European Patent Office
Office européen des brevets

(11) **EP 2 196 253 A2**

(12) **EUROPEAN PATENT APPLICATION**

(43) Date of publication:
**16.06.2010 Bulletin 2010/24**

(51) Int Cl.:
***B01D 63/06*** (2006.01)   ***C07C 29/76*** (2006.01)
***C12P 7/06*** (2006.01)

(21) Application number: **09158636.2**

(22) Date of filing: **23.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **13.11.2008 JP 2008290783**

(71) Applicant: **MITSUBISHI HEAVY INDUSTRIES, LTD. Tokyo 108-8215 (JP)**

(72) Inventors:
• **Tachibana, Shinya**
  **Hiroshima, Hiroshima-ken (JP)**

• **Tanaka, Yukio**
  **Hiroshima, Hiroshima-ken (JP)**
• **Hirayama, Haruaki**
  **Mihara, Hiroshima-ken (JP)**
• **Kashiwagi, Hideo**
  **Mihara, Hiroshima-ken (JP)**

(74) Representative: **Intes, Didier Gérard André et al**
  **Cabinet Beau de Loménie**
  **158, rue de l'Université**
  **75340 Paris Cedex 07 (FR)**

(54) **Membrane container**

(57) Modularized water separating membranes in a plural number of units are provided. A membrane container used in a dehydration system for separating water from treated fluid includes a shell part (11) having a permeated fluid outlet nozzle (16) and containing a plurality of water separating membranes arranged in parallel with respect to the flow direction of treated fluid; an upper channel part (12) having a treated fluid inlet nozzle (14) and connecting with the upper end of the shell part (11); and a lower channel part (13) having a treated fluid outlet nozzle (15) and connecting with the lower end of the shell part (11).

FIG.1(c)

EP 2 196 253 A2

**Description**

BACKGROUND OF THE INVENTION

Field of the Invention

The present invention relates to a membrane container containing water separating membranes. In particular, the present invention relates to a membrane container in which water separating membranes are modularized into a plural number of units to decrease the size of a plant. Also, the present invention relates to a membrane container in which the exposed area of the outer surface of the membrane container is decreased to reduce the heat radiation loss.

Description of the Related Art

As a fuel source as an alternative fossil fuel, ethanol has attracted attention, and the market size thereof is predicted to be 55 million kiloliters in 2010. However, to use ethanol as a fuel, a crude product obtained from a biological raw material such as corn must be distilled and refined so as to be dehydrated to at least 99.5 wt%. Conventionally, in dehydrating, a dilute ethanol aqueous solution is distilled in a distilling column so as to be concentrated to a point close to the azeotropic point of an ethanol-water system, and then the solution is dehydrated.

As a method for dehydration, a method is available in which an entrainer is added, and dehydration is accomplished by azeotropic distillation. However, this method requires a process in which a three-component system is azeotropically distilled, and further, that the entrainer be recovered. Therefore, this method has some drawbacks in that large amounts of heat energy are required.

Another method is also available in which a plurality of molecular sieve tanks are arranged, and dehydration is accomplished while these tanks are switched over in batch mode. This method also has a drawback in that the regeneration of the molecular sieve tank consumes large amounts of energy.

To overcome the above drawbacks, Japanese Unexamined Patent Application Publication No. 58-21629, Japanese Unexamined Patent Application Publication No. 02-229529, and other similar publications disclose a technique in which an element that does not have the above-described drawbacks, such as a water separating membrane, is used. However, a dehydrator using the water separating membrane has problems of large size and poor maintainability.

SUMMARY OF THE INVENTION

The present invention was made in view of the above circumstances, and accordingly, an object thereof is to provide a membrane container in which water separating membranes are modularized into a plural number of units to facilitate the increase in size of the water separating membrane and to decrease the scale of a plant equipped with a dehydrator using the water separating membranes. Furthermore, another object of the present invention is to decrease the exposed area of an outer surface of the membrane container and thereby to reduce the heat radiation loss by modularizing the water separating membranes into a plural number of units.

To achieve the above object, the present invention provides a membrane container used in a dehydration system for separating water from treated fluid, including a shell part having a permeated fluid outlet and containing a plurality of water separating membranes arranged in parallel with respect to the flow direction of the treated fluid; an upper channel part having a treated fluid inlet and connecting with the upper end of the shell; and a lower channel part having a treated fluid outlet and connecting with the lower end of the shell part. In this membrane container, a treated fluid inlet is provided in the upper channel part or the lower channel part, and a treated fluid outlet is provided in the upper channel part or the lower channel part. The permeated fluid outlet, the treated fluid inlet, and the treated fluid outlet are generally formed as a permeated fluid outlet nozzle, a treated fluid inlet nozzle, and a treated fluid outlet nozzle, respectively.

In the membrane container in accordance with the present invention, the shell part preferably has a reinforcing wall extending in the lengthwise direction thereof. In this case, the reinforcing wall preferably has at least one through hole.

Also, in the membrane container in accordance with the present invention, it is preferable that the upper and lower channel parts each have an end plate part, that the shell part have an end plate part at positions corresponding to the end plate parts of the upper and lower channel parts, and that a partition plate be further provided between the end plate parts of the upper and lower channel parts and the end plate of the shell part.

In the membrane container in accordance with the present invention, the channel part preferably has at least one steam part for applying heat to the treated fluid. Also, a steam part for applying heat to the treated fluid is preferably further provided on the outer surface of the shell pant.

A temperature measuring device for monitoring the temperature of the treated fluid is preferably provided. Also, a concentration measuring device for monitoring the concentration of the treated fluid is preferably provided.

In the membrane container in accordance with the present invention, the treated fluid is generally an organic aqueous solution. The organic component of the organic aqueous solution is preferably one organic component selected from the group consisting of alcohols such as ethanol, propanol, isopropanol, and glycol, carboxylic acids such as acetic acid, ethers such as dimethyl ether and diethyl ether, aldehydes such as acetaldehyde, ketones such as acetone and methyl ethyl ketone, and esters such as ethyl ester acetate, and is preferably water-soluble.

According to the present invention, there is provided a membrane container in which the above-described configuration is employed, and the water separating membranes are modularized into a unit of plural numbers to facilitate the increase in size of the water separating membrane in a plant equipped with a dehydrator using the water separating membranes.

Also, according to the present invention, there is provided a membrane container in which the above-described configuration is employed, and the water separating membranes are modularized into a plural number of units to decrease the size of a plant equipped with a dehydrator using the water separating membranes.

Furthermore, according to the present invention, there is provided a membrane container in which the above-described configuration is employed, and the water separating membranes are modularized into a plural number of units to improve the maintainability, for example, for checking airtightness of the membrane container in a plant equipped with a dehydrator using the water separating membranes.

According to the present invention, there is provided a membrane container in which the above-described configuration is employed, and the water separating membranes are modularized into a plural number of units to decrease the exposed area of an outer surface of the membrane container, thereby reducing the heat radiation loss.

BRIEF DESCRIPTION OF THE DRAWINGS

FIG. 1 (a) is a front view showing one embodiment of a membrane container in accordance with the present invention;
FIG. 1(b) is a horizontal sectional view showing one embodiment of a membrane container in accordance with the present invention;
FIG. 1(c) is a side sectional view showing one embodiment of a membrane container in accordance with the present invention;
FIG. 2 is a top view showing a membrane container in accordance with the present invention and the installation space thereof;
FIG. 3 is a top view showing one embodiment of a membrane container unit in which several membrane containers in accordance with the present invention are arranged in parallel;
FIG. 4(a) is a front view of a steam heater provided on the side surface of a membrane container in accordance with one embodiment of the present invention;
FIG. 4(b) is a top view of steam heaters arranged on the side surfaces of a plurality of membrane containers in accordance with one embodiment of the present invention;
FIG. 5 is a sectional view showing one embodiment of a series-type membrane container in accordance with the present invention;
FIG. 6 is a schematic diagram showing one embodiment of a dehydration system using membrane containers in accordance with the present invention;
FIG. 7(a) is a top view schematically showing a monolith-type water separating membrane part;
FIG. 7(b) is a sectional view schematically showing a monolith-type water separating membrane part;
FIG. 8(a) is a top view schematically showing a tubular-type water separating membrane part;
FIG. 8(b) is a sectional view schematically showing a tubular-type water separating membrane part; and
FIG. 9 is a graph showing the relationship between primary-side flow velocity and permeation flow velocity in one example of a series-type membrane container in accordance with the present invention.

DETAILED DESCRIPTION OF THE PREFERRED EMBODIMENT

An embodiment of a membrane container in accordance with the present invention will now be described in more detail with reference to the accompanying drawings. In the embodiment described below, a specific number of membrane containers are typically shown. However, the present invention is not limited to the embodiment described below.

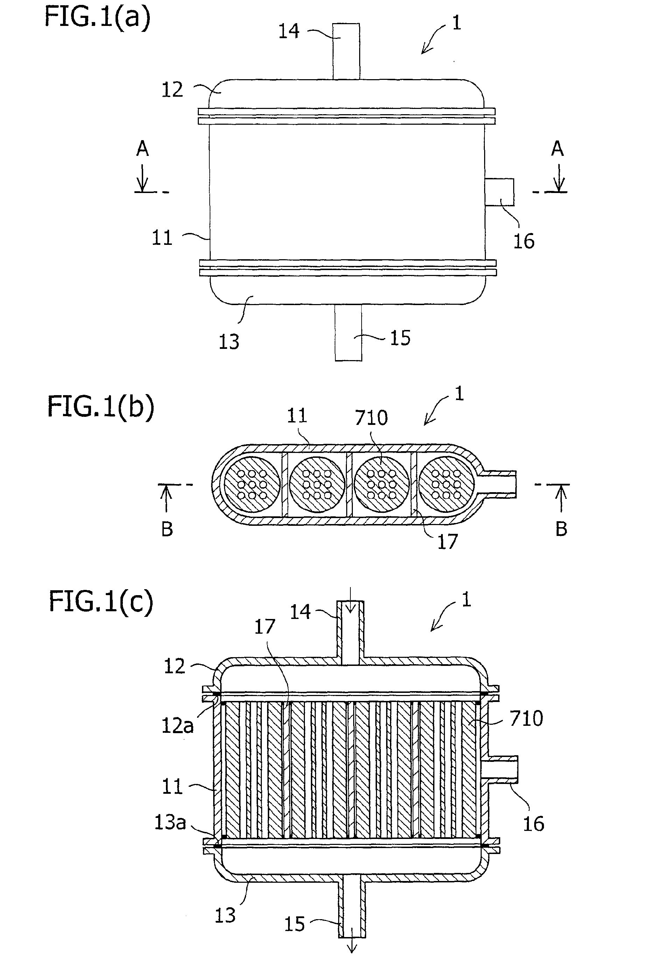

FIG. 1 (a) is a front view showing one embodiment of a membrane container in accordance with the present invention. The membrane container 1 in accordance with the present invention includes a shell part 11, an upper channel part 12, a lower channel part 13, a treated fluid inlet nozzle 14, a treated fluid outlet nozzle 15, and a permeated fluid outlet nozzle 16. The shell part 11 is a cylinder having an elliptical cross section, and the upper channel part 12 and the lower channel part 13 are connected to both of the upper and lower ends of the shell part 11 via packings 12a and 13a, respectively. The shell part 11 is provided with the permeated fluid outlet nozzle 16, and the upper and lower channel parts 12 and 13 are provided with the treated fluid inlet nozzle 14 and the treated fluid outlet nozzle 15, respectively.

FIG. 1(b) is a horizontal sectional view, taken along the line A-A of FIG. 1(a), showing one embodiment of a membrane container in accordance with the present invention. Also, FIG. 1(c) is a side sectional view, taken along the line B-B of FIG. 1(b), showing one embodiment of a membrane container in accordance with the present invention. The membrane container 1 in accordance with the present invention can contain several water separating membrane parts 710 arranged in parallel. FIG. 1 shows an example in which monolith-type membrane parts are used as the water separating membrane parts 710. However, tubular-type membrane parts may also be used.

As shown in FIGS. 1(b) and 1(c), the shell part 11 is a cylinder having an elliptical cross section, and the circle curvature of each end thereof coincides with the circle curvature of the water separating membrane part 710. Also, to prevent the structure of the shell part 11 from being deformed by temperature or pressure, reinforcing walls 17 are arranged in the shell part 11. As shown in FIGS. 1(b) and 1(c), the reinforcing walls 17 can be formed so as to partition individual water separating membrane parts 710. However, the configuration of the reinforcing walls 17 is not limited to this embodiment. Also, the reinforcing wall 17 is provided with at least one through hole. Thereby, a fluid flows in the whole of the shell part 11. The membrane container 1 in accordance with the present invention can be used in any of a horizontal position, a vertical position, and an inclined position.

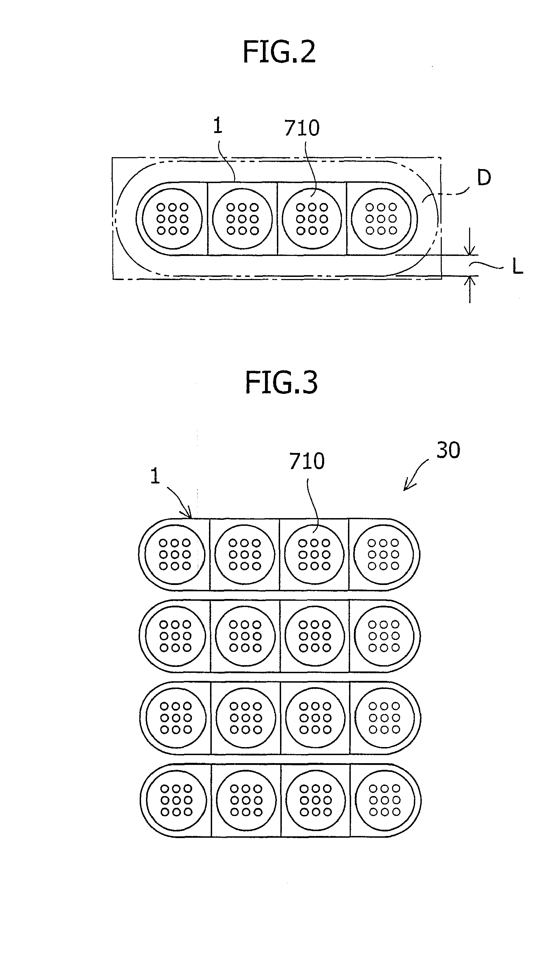

FIG. 2 is a top view showing the membrane container 1 in accordance with the present invention and the installation space thereof. In FIG. 2, D denotes the installation space for installing the membrane container, and L denotes work space width, piping space width, and measuring space width. Conventionally, the plurality of water separating membrane parts have been incorporated in the cylindrical shell, and a plurality of cylindrical shell parts have been installed according to the quantity to be treated. Therefore, the conventional membrane container has a drawback of needing a large installation space. In contrast, in the present invention, the plurality of water separating membrane parts 710 are incorporated in the membrane container 1 according to the quantity to be treated as shown in FIG. 2. Thereby, the installation space D can be decreased. For example, it is assumed that N number of membrane containers is present, and a work space D for installing the membrane container 1 is 0.5 m. In this case, as compared with the conventional configuration, the work space can be decreased by a factor of 1/(N-1). The details thereof are described below.
Conventional installation space:

$$(N{\times}D + 0.5{\times}2{\times}N) \times (D + 0.5{\times}2) = N\,(D + 1)2$$

Present invention installation space:

$$(N{\times}D + 0.5{\times}2) \times (D + 0.5{\times}2) = (ND + 1)\,(D + 1)$$

Conventional installation space / Present invention installation space:

$$N\,(D + 1) \,/\, (ND + 1)$$

$$= ((ND + 1) + (N - 1)) \,/\, (ND + 1)$$

$$= 1 + (N - 1) \,/\, (ND + 1)$$

Furthermore, by using the membrane container 1 in accordance with the present invention, the area of shell outer wall surface is decreased. Hereinbelow, the area of outer wall surface of the membrane container in accordance with the present invention is compared with the area of the conventional outer wall surface.
Area of conventional outer wall surface:

$$\pi D \times N \times L \ (\text{L: membrane length})$$

Area of present invention outer wall surface:

$$(\pi D + (N - 1) \times D) \times L$$

Area of conventional outer wall surface / area of present invention outer wall surface:

$$\pi D \times N \times L / ((\pi D + (N - 1) \times D) \times L)$$

$$= \pi N / (N + \pi - 1)$$

$$\doteqdot \pi - (\pi^2 - \pi)/(N + \pi - 1)$$

That is to say, in the conventional configuration, the area of the shell outer wall surface in contact with the atmosphere increases by a factor of N according to the number N of the water separating membrane parts. On the other hand, in the present invention, by using the membrane container 1, $(\pi^2-\pi)/(N+\pi-1)$ approaches zero when the number N of the water separating membrane parts is infinite. In the present invention, therefore, each time the number of water separating membrane parts 710 increases by one, the area of shell outer wall surface can be decreased by a factor of about three as compared with the conventional configuration.

Also, the water separating membrane used in the present invention separates water by using the pervaporation method in which the supply side is a liquid phase and the permeation side is a gas phase. In this separation method, when the permeating component changes in phase from liquid to gas, the temperature of treated fluid is decreased by latent heat of vaporization. The water separating membrane can also be used for the separation in a gas phase or a liquid phase not involving a phase change in a method other than the pervaporation method.

Generally, the permeation rate of water separating membrane is decreased greatly by a decrease in the temperature of treated fluid. Therefore, to keep the temperature of treated fluid constant, a heating means such as a steam heater is necessary. In contrast, the membrane container 1 in accordance with the present invention can reduce the heat radiation loss by decreasing the area of shell outer wall surface. Therefore, by using the membrane container in accordance with the present invention, the decrease in the temperature of treated fluid can be prevented without the use of a heating means.

In addition, conventionally, to supply treated fluid, a pipe must be installed for each shell. The membrane container 1 in accordance with the present invention need not be mounted with a pipe separately because the treated fluid is supplied via the upper and lower channel parts 12 and 13 connected to both ends of the shell part 11.

FIG. 3 is a top view showing one embodiment of a membrane container unit 30 in which a plurality of membrane containers 1 in accordance with the present invention are arranged in parallel. As shown in FIG. 3, the several membrane containers 1 are arranged in parallel. Thereby, a proper increase in scale can be achieved easily according to the quantity to be treated. In this case, the membrane containers 1 may be arranged so that the shell outer wall surface of a membrane container 1 comes into contact with the shell outer wall surface of another membrane container 1. The heat radiation loss can thereby be reduced effectively.

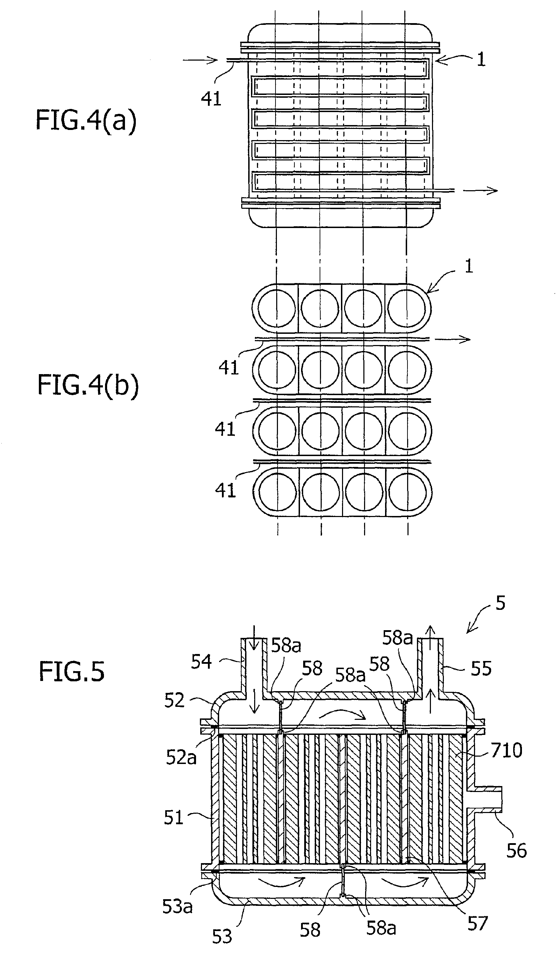

To prevent a decrease in the temperature of treated fluid, the steam heater may be arranged in the upper and lower channel parts 12 and 13. Alternatively, the steam heater may be arranged on the side surface of the membrane container 1. FIG. 4(a) is a front view of the steam heater provided on the side surface of the membrane container in accordance with the present invention. To make the temperature of treated fluid constant, a zigzag-shaped steam heater 41 is arranged on the side surface of the membrane container. Also, FIG. 4(b) is a top view of the steam heaters arranged on the side surfaces of the plurality of membrane containers in accordance with the present invention. The zigzag-shaped steam heaters 41 are arranged in the spaces between the membrane containers. By arranging the steam heaters appropriately, the decrease in the temperature of treated fluid can be prevented. The permeation rate of water separating membrane can be prevented from decreasing. One type of common zigzag-shaped steam heater is shown. However, the type of the steam heater is not limited to the above-described zigzag type, and a steam heater of another type can also be used.

Next, a series-type membrane container 5 in accordance with the present invention is explained. FIG. 5 is a sectional view showing one embodiment of the series-type membrane container in accordance with the present invention. In the membrane container 1 shown in FIG. 1, the several water separating membrane parts 710 are arranged in parallel in the shell part 11. Therefore, the treated fluid passes through the respective water separating membrane parts 710 at the same time. In contrast, in the membrane container 5 shown in FIG. 5, the treated fluid passes through the respective water separating membrane parts 710 one after another.

Like the membrane container 1 shown in FIG. 1, the membrane container 5 shown in FIG. 5 contains the several water separating membrane parts 710 in parallel. The membrane container 5 includes a shell part 51, an upper channel part 52, a lower channel part 53, a treated fluid inlet nozzle 54, a treated fluid outlet nozzle 55, and a permeated fluid outlet nozzle 56. The shell part 51 is a cylinder having an elliptical cross section, and the upper channel part 52 and the lower channel part 53 are connected to both of the upper and lower ends of the shell part 51 via packings 52a and 53a, respectively. The shell part 51 is provided with the permeated fluid outlet nozzle 56, and the upper and lower channel part 52 is provided with the treated fluid inlet nozzle 54 and the treated fluid outlet nozzle 55. Partition plates 58 are provided in the upper and lower channel parts 52 and 53 in a state of being inserted in end plate parts 58a. The treated fluid is caused to pass through the water separating membrane parts 710 one after another by the partition plates 58. Thereby, the flow velocity of treated fluid can be increased, and therefore the movement of substance can be accelerated.

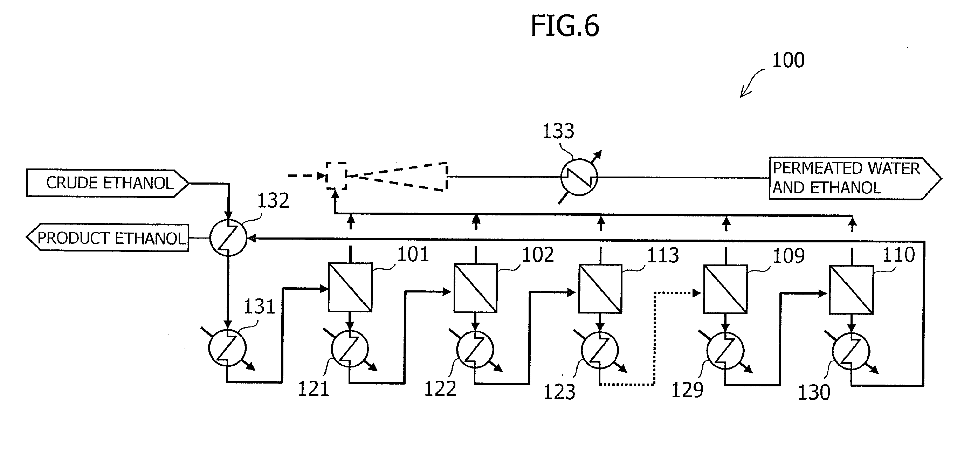

FIG. 6 is a schematic diagram showing one embodiment of a dehydration system 100 using the membrane containers in accordance with the present invention. In the dehydration system 100 of this embodiment, crude ethanol is assumed as a treated fluid to be dehydrated. Regarding the concentration of the crude ethanol aqueous solution, an aqueous solution having an ethanol concentration of 94.5 to 94.8 wt% is assumed. That is to say, crude ethanol containing ethanol as an organic component is used as the treated fluid. The product fluid obtained finally, that is, product ethanol (dehydrated ethanol) has an ethanol concentration of 99.5 to 99.8 wt%.

The dehydration system 100 of this embodiment is primarily made up of membrane containers 101 to 110, steam parts 121 to 132, and a cooler 133. Each of the membrane containers 101 to 110 has at least one water separating membrane part 710.

The principle of the dehydration system 100 of this embodiment is the pervaporation method in which the primary side of membrane is a liquid phase, and the secondary side thereof is a gas phase. The liquid having permeated the membrane is vaporized by a reduced pressure on the secondary side, and the latent heat of vaporization is supplied by the latent heat of heat from the primary side to the secondary side. Therefore, the inlet temperature of the membrane container 101 is increased by the steam part 131, and intermediate steam heaters 121 to 130 are arranged between the membrane containers 102 to 110, by which the decrease in temperature can be made small. Thereby, the water separation performance of the membrane can be improved.

Hereinbelow, the water separation membrane part 710 is explained. The water separation membrane part 710 is a device for separating water from an organic aqueous solution by the pervaporation method. The organic aqueous solution is a mixture of water and a liquid soluble in water. As the liquid soluble in water, ethanol, methanol, isopropyl alcohol, acids such as acetic acid, and ketones such acetone can be cited. However, the liquid soluble in water is not limited to these liquids.

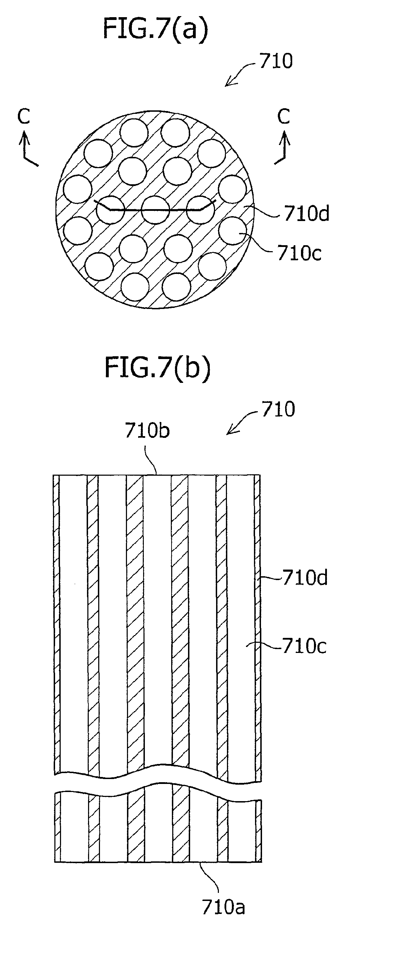

FIG. 7 (a) is a top view of the monolith-type water separating membrane part 710. Also, FIG. 7 (b) is a sectional view of the monolith-type water separating membrane part 710, being a sectional view taken along the line C-C of FIG. 7 (a). The monolith-type water separating membrane part 710 is configured by providing a plurality of flow paths 710c for organic aqueous solution, which are one or more hollow parts extending in the up and down direction to allow the organic aqueous solution to pass through, in a columnar water separating membrane 710d. Usually, in the water separating membrane part having such a configuration, the flow path 710c for organic aqueous solution in the water separating membrane is called the primary side or the supply side of membrane, and the outside of the water separating membrane 710d is called the secondary side or the permeation side.

In the membrane separation accomplished by the pervaporation method using such a water separating membrane part, the water separating membrane part 710 is preferably provided so that the direction of the flow path is parallel with the vertical direction. In this case, an organic aqueous solution is supplied from an inlet 710a on the lower side in the vertical direction while the pressure on the permeation side of the water separating membrane part 710 is reduced, being caused to flow in the direction opposite to gravity, and is discharged from an outlet 710b on the upper side in the vertical direction. By this operation, water in the organic aqueous solution is changed to water vapor, and the water vapor is drawn out to the permeation side from the side surface of the columnar water separating membrane 710d. As a result, the organic aqueous solution recovered from the outlet 710b of the water separating membrane part is dehydrated.

The monolith-type water separating membrane part 710 shown in FIG. 7 is shown schematically. As one example, a water separating membrane part provided with thirty holes each having a diameter of 3 mm in a columnar water separating membrane having a diameter of 30 mm can be used. As another example, a water separating membrane part provided with two hundred holes each having a diameter of 2 mm in a columnar water separating membrane having a diameter of 150 to 200 mm can be used. The length of the water separating membrane part can be determined appropriately by one skilled in the art according to the desired membrane performance. As one example, a water separating membrane part having a length ranging from 150 mm to 1 m can be used.

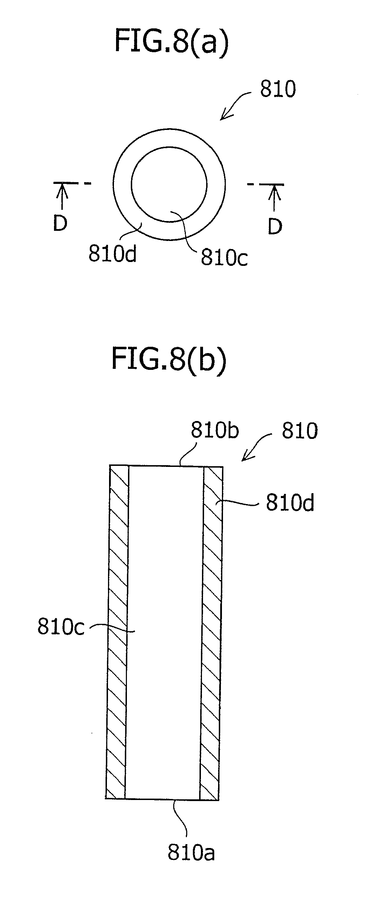

Next, the tubular-type water separating membrane part is explained. FIG. 8 (a) is a top view of a tubular-type water separating membrane part 810. Also, FIG. 8 (b) is a sectional view, taken along the line D-D of FIG. 8 (a), of the tubular-type water separating membrane part 810. The tubular-type water separating membrane part 810 is a tubular water separating membrane 810d provided with only one flow path 810c for organic aqueous solution therein. The tubular-type water separating membrane part 810 has the same installation mode and operation effect as those of the monolith-type water separating membrane part. As one example, a tubular-type water separating membrane part having an outside diameter of 10 mm and an inside diameter of 7 mm can be used. As another example, a tubular-type water separating membrane part having an outside diameter of 30 mm and an inside diameter of 22 mm can be used. Regarding the length, as one example, a tubular-type water separating membrane part having a length ranging from 150 mm to 1 m can be used.

As the water separating membrane constituting the water separating membrane part, an inorganic porous membrane in which holes on the order of nanometers or smaller are controlled precisely can be used. The porous membrane having fine holes achieves a molecule sieving effect of allowing small-molecule gases to pass through and exclude large-molecule gases, and exhibits a behavior of activation diffusion in which the permeation factor thereof increases with the increase in temperature. As an example of a porous membrane having fine holes, a carbon membrane, a silica membrane, and a zeolite membrane can be mentioned. In this embodiment, as the water separating membrane, a silica- or zeolite-based inorganic water separating membrane having fine holes of 10 Angstroms or less is suitable.

Also, the inorganic water separating membrane described in Japanese Patent No. 2808479 can also be applied. The inorganic water separating membrane described in Japanese Patent No. 2808479 is an acid-resistant composite separation membrane obtained by carrying silica gel obtained through hydrolysis of alkoxysilane containing an ethoxy group or methoxy group in the fine holes of an inorganic porous body. The shape, size, and material of the water separating membrane part can be selected appropriately by one skilled in the art according to the intended use.

Also, all of the membrane containers 101 to 110 may be the same, and some of the membrane containers may be different. For example, the membrane containers equipped with the tubular-type water separating membrane parts and the membrane containers equipped with the monolith-type water separating membrane parts can be arranged alternately. Also, respective membrane containers can have a different number of water separating membrane parts.

The cooler 133 may be a cooler capable of cooling a high-temperature organic aqueous solution that has passed through the membrane containers 101 to 110 to an ordinary temperature. As the cooler 133, an ordinary heat exchanger can be used.

Also, the dehydration system 100 of this embodiment may be configured so that a detector is installed at the outlet of the membrane container. The detector can continuously monitor the state of the membrane container, and can carry out on-line detection of a defect. The detector detects a change in temperature and concentration. For example, when the quantity of permeation is decreased by clogging, the detector detects that the decrease in outlet temperature on the primary side is small. Also, when the quantity of permeation is increased by a defect produced in the membrane, the detector can detect that the decrease in temperature on the secondary side is large. Furthermore, the detector can detect that the outlet concentration on the primary side has been changed by means of the quantity of permeation. When the detector detects an abnormal change in temperature and concentration, the dehydration system 100 stops the supply of crude ethanol to the membrane containers 101 to 110. Thereby, broken water separating membrane part in the membrane container can be replaced easily.

The dehydration system 100 of this embodiment can be configured so that a liquid extracting means is provided on the secondary side. As the liquid extracting means, a TLU (pumping trap GP/GT) can be used. The TLV is a mechanical pump in which steam or compressed air is used as an operating gas to send drain or waste liquid under pressure, and carries out the supply control of the operating gas by the switching of supply and exhaust valves due to the movement of a float in a body. The TLV is of two types: a GP type exclusively used for sending drain, waste liquid, and the like under pressure, and a GT type incorporating a trap.

Hereinbelow, the features of the TLV are explained. Firstly, the TLV is a mechanical pump that does not require electricity. Specifically, level control, electricity, and selection are not required at all. Secondly, the TLV is a pump for high-temperature drain without cavitation. Also, the TLV has a wide usable range and high capacity. Specifically, the usable range is 0.3 to 10.5 $kg/cm^2$, and the capacity is 6650 kg/hour (at the time when the back pressure is 1 kg, and the operating steam pressure is 7 kg). Furthermore, the capacity is 3.0 kg/hour (at the time when the drain amount is 1T/H, the back pressure is 1 kg, and the operating steam pressure is 3.4 kg).

Also, the TLV can be used as a high-capacity trap because it can be used for an application in which the positive and negative pressures vary. Furthermore, the inlet and outlet pipes and the supply and exhaust pipes need not be separated because maintenance can be performed in the state in which the pipes are installed. Finally, the TLV is highly reliable because it has a unique lever snap-action mechanism.

[Example 1]

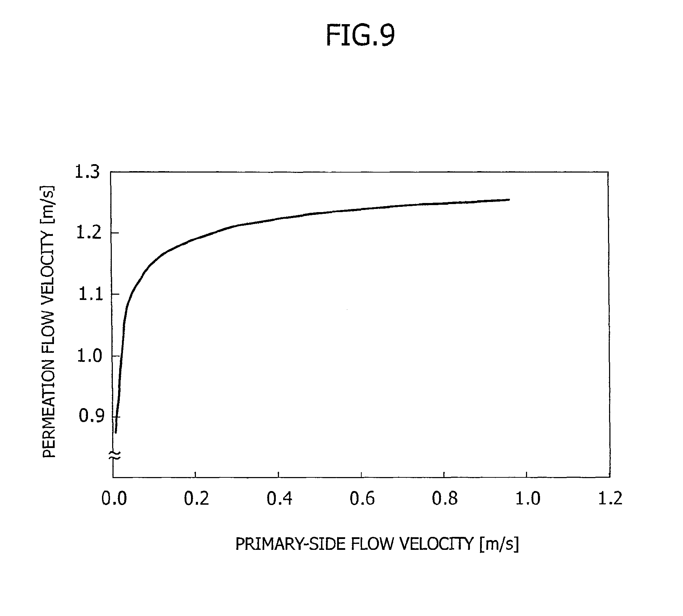

In the dehydration system 100 using the membrane containers 5 in accordance with the present invention, the relationship between the flow velocity on the primary side and the permeation flow velocity was measured. FIG. 9 is a graph showing this relationship.
When the flow velocity at the primary side increased by a factor of six, the bulk substance movement was accelerated significantly. This showed that the water separating ability was improved.

**Claims**

1. A membrane container (1) used in a dehydration system for separating water from treated fluid, **characterized in that** it comprises
   a shell part (11) having a permeated fluid outlet (16) and containing a plurality of water separating membranes (710, 810) arranged in parallel with respect to the flow direction of the treated fluid;
   an upper channel part (12) having a treated fluid inlet (14) and connecting with the upper end of the shell (11); and
   a lower channel part (13) having a treated fluid outlet (15) and connecting with the lower end of the shell part (11).

2. A membrane container (5) used in a dehydration system for separating water from treated fluid, **characterized in that** it comprises
   a shell part (51) having a permeated fluid outlet (56) and containing a plurality of water separating membranes (710, 810) arranged in parallel with respect to the flow direction of the treated fluid;
   an upper channel part (52) having a treated fluid inlet (54) and a treated fluid outlet (55) and connecting with the upper end of the shell (51); and
   a lower channel part (53) connecting with the lower end of the shell part (51).

3. A membrane container used in a dehydration system for separating water from treated fluid, **characterized in that** it comprises
   a shell part having a permeated fluid outlet and containing a plurality of water separating membranes arranged in parallel with respect to the flow direction of the treated fluid;
   an upper channel part connecting with the upper end of the shell; and
   a lower channel part having a treated fluid inlet and a treated fluid outlet and connecting with the lower end of the shell part.

4. The membrane container according to any one of claims 1 to 3, wherein the shell part (11, 51) comprises a reinforcing wall (17) extending in the lengthwise direction thereof.

5. The membrane container according to claim 4, wherein the reinforcing wall (17) has at least one through hole.

6. The membrane container according to any one of claims 1 to 5, wherein the upper and lower channel parts (12, 13, 52, 53) each have an end plate part; the shell part (11, 51) has an end plate part at positions corresponding to the end plate parts of the upper and lower channel parts (12, 13, 52, 53); and a partition plate is further provided between the end plate parts of the upper and lower channel parts (12, 13, 52, 53) and the end plate of the shell part (11,51).

7. The membrane container according to any one of claims 1 to 6, wherein the channel part has at least one steam part (41) for applying heat to the treated fluid.

8. The membrane container according to claim any one of claims 1 to 7, wherein a steam part (41) for applying heat to the treated fluid is further provided on the outer surface of the shell part (11, 51).

9. The membrane container according to any one of claims 1 to 8, wherein a temperature detector for monitoring the temperature of the treated fluid is provided.

10. The membrane container according to any one of claims 1 to 9, wherein a concentration detector for monitoring the concentration of the treated fluid is provided.

11. The membrane container according to any one of claims 1 to 10, wherein the treated fluid is an organic aqueous solution.

12. The membrane container according to claim 11, wherein the organic component of the organic aqueous solution is one organic component selected from a group consisting of alcohols such as ethanol, propanol, isopropanol, and glycol, carboxylic acids such as acetic acid, ethers such as dimethyl ether and diethyl ether, aldehydes such as acetaldehyde, ketones such as acetone and methyl ethyl ketone, and esters such as ethyl ester acetate, and is water-soluble.

FIG.1(a)

FIG.1(b)

FIG.1(c)

# FIG.2

# FIG.3

FIG.4(a)

FIG.4(b)

FIG.5

# FIG.6

EP 2 196 253 A2

# FIG.7(a)

710

C                          C

710d

710c

# FIG.7(b)

710

710b

710d

710c

710a

# FIG.8(a)

810

810d    810c

D          D

# FIG.8(b)

810b    810

810d

810c

810a

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58021629 A
- JP 2229529 A
- JP 2808479 B